# EUROPEAN PATENT APPLICATION

(11) **EP 3 444 133 A2**
(43) Date of publication of application: **20.02.2019**
(21) Application number: 18184509.0
(22) Date of filing: 19.07.2018
(51) Int. Cl.: B60H 1/00

(54) **TWO-DOOR HVAC AIR INTAKE DESIGN STRATEGY FOR VEHICLE AIR CONDITIONING SYSTEM**

(30) Priority: 18.08.2017 US 201715680964
(71) Applicant: Air International (US) Inc., Auburn Hills, Michigan 48326 (US)
(72) Inventor: WIJAYA, Halim, Canton, Michigan 48188 (US); CHAO, Wu Gui, Chongqing, Chongqing (CN); YUE, Yuan, Chongqing, Chongqing (CN); CHENG, Tang, Chongqing, Chongqing (CN)
(74) Representative: Tilmann, Max Wilhelm

(57) **Abstract**

A two-door HVAC air intake (10) comprising an air intake body having a fresh air opening (26) and first (20) and second (22) recirculated air openings is disclosed. A first door (21) is provided that is movable from a first recirculation opening-unblocking/fresh air opening-blocking position to a first recirculation opening-blocking/fresh air opening-unblocking position. A second door (23) is provided that is movable from a second recirculation opening-unblocking position to a second recirculation opening-blocking position. The doors may be shell doors or flap doors. Fresh air mode is achieved by moving the first and second doors to their recirculation opening-blocking positions. Partial air recirculation mode is achieved by moving the first door to its first recirculation opening-blocking position and the second door to its second recirculation opening-unblocking position. Full air recirculation mode is achieved by moving the first door to its first recirculation opening-unblocking/fresh air opening-blocking position and the second door to its second recirculation opening-unblocking position.

## Description

### TECHNICAL FIELD

The disclosed inventive concept relates generally to heating, ventilating and air conditioning (HVAC) systems for vehicles. More particularly, the disclosed inventive concept relates to a two-door HVAC air intake design strategy for an automotive vehicle that optimizes power consumption while providing for a desirable level of recirculated air. The passage of air is regulated by a pair of rotary doors. One of the rotary doors alternatively regulates the passage of fresh air and recirculated air. The other rotary door regulates only the passage of recirculated air. The two-door HVAC air design provides for three settings including a fresh air setting in which both doors are closed, a partial recirculated air setting in which one of the doors is closed and one of the door is open, and a full recirculation setting in which both doors are open. The rotary doors may be shell doors or flap doors.

### BACKGROUND OF THE INVENTION

A goal of automobile manufacturers has long been improved fuel economy for internal combustion engines. The development of the electric vehicle (EV) and the hybrid electric vehicle (HEV) also requires automobile manufacturers to reduce vehicle power consumption and accelerate passenger cabin heating.

Consistent with these goals, one of the challenges faced by automobile manufacturers is a way to maintain optimum environmental conditions within the vehicle cabin while minimizing vehicle energy consumption. Conventionally, the comfort within the vehicle cabin is maintained by both vehicle heating and cooling systems. Early automobiles relied upon incoming fresh air for both heating and cooling. Today's vehicle no longer conventionally relies solely upon incoming fresh air in this manner for optimum cabin conditions with minimum energy consumption. Instead, in the modern vehicle, the recirculation mode has been introduced into heating and cooling system technologies. These systems provide for the interior air recirculation mode.

To achieve this goal, the amount of outside air brought into the cabin must be minimized and the amount of cabin air being recirculated must be maximized. Ideally, the power consumption will be minimized when 100% cabin air recirculation is used. However, in the case of cooler ambient temperatures, 100% cabin air recirculation may cause the fogging of the inner surfaces of the vehicle's windows (including the windshield) results. Consequently, an amount of outside air is needed to be brought into the vehicle to prevent cabin interior fogging. However, a full fresh air mode in cold weather results in a reduction of heater/defroster performance. If a full fresh air mode is selected in hot weather, an increased cooling load will be imposed on the air conditioning compressor.

In response to the need to optimize interior conditions, there are two ways in which fresh air can enter the vehicle's heating, ventilation and air conditioning (HVAC) system. One of these ways is the conventional fresh air mode. The other is the partial air recirculation mode in which some fresh air is allowed to enter the cabin while some of the air already in the cabin is recirculated. While providing a partial response to the need to balance vehicle energy consumption and maximum cabin conditions, the amount of fresh air entering the HVAC system must be managed with care or one or both of these conditions will not be optimized.

Accordingly, as is often the case, there is room for improvement in the art of controlling the selection of incoming air to achieve parameter optimization.

### SUMMARY OF THE INVENTION

The disclosed invention provides a two-door HVAC air intake system and method of efficiently selecting air intake between a full fresh air mode, a partial recirculated air mode and full recirculated air mode. The disclosed invention provides optimum heating/cooling performance, fuel economy and/or high voltage (HV) battery power consumption. The HVAC air intake design incorporates two rotary doors that, working in combination with a fresh air opening and two recirculated air openings, allow for the selection between the full fresh air mode, the partial recirculated air mode, and the full recirculated air mode. One of the two doors provides for selection between recirculation and fresh air. The other of the two doors selects for recirculation. The rotary doors may be shell doors or flap doors.

The intake system manages the doors to move progressively to any position based on exterior and interior air conditions as well as cooling and heating loads as well as cabin fogging probability. With the increase of cooling and heating loads, the system is moved toward full the recirculation mode. Conversely, with the increase of surface fogging, the system is moved toward the full fresh air mode.

The disclosed two-door HVAC air intake design provides an air intake design including an air intake body having a fresh air opening, a first recirculated air opening, and a second recirculated air opening. A first rotary door and a second rotary door are pivotably disposed in the body. The first rotary door is reversibly movable from a first recirculation opening-unblocking/fresh air opening-blocking position to a first recirculation opening-blocking/fresh air opening-unblocking position. The second rotary door is reversibly movable from a second recirculation opening-unblocking position to a second recirculation opening-blocking position.

The first recirculated air opening and said second recirculated air opening may be situated side-by-side and the fresh air opening is situated adjacent the first recirculated air opening. Alternatively, the fresh air opening may be situated between the first recirculated air opening and the second recirculated air opening.

To select the fresh air mode, the first and second rotary doors are moved to their recirculation opening-blocking positions. To select the partial air recirculation mode, the first rotary door is moved to its first recirculation opening-blocking position and the second rotary door is moved to its second recirculation opening-unblocking position. To select the full air recirculation mode, the first rotary door is moved to its first recirculation opening-unblocking/fresh air opening-blocking position and the second rotary door is moved to its second recirculation opening-unblocking position.

By selectively choosing a position between the full recirculation mode and the full fresh air mode, a low air side pressure drop is achieved, thereby improving system efficiency. In addition, the system of the disclosed inventive concept minimizes the rush of air and thus improves vehicle noise, vibration and harshness (NVH). Furthermore, the disclosed inventive design concept prevents the bypass of fresh air from outside of the vehicle directly into the vehicle's cabin.

Other advantages and features of the invention will become apparent when viewed in light of the detailed description of the preferred embodiment when taken in conjunction with the attached drawings and the appended claims.

### BRIEF DESCRIPTION OF THE DRAWINGS

For a more complete understanding of this invention, reference should now be made to the embodiment illustrated in greater detail in the accompanying drawing and described below by way of examples of the invention wherein:
FIG. 1 is a perspective view of a two-door HVAC air intake shown in partial broken lines according to an embodiment of the disclosed inventive concept;
FIG. 2 is a view of the two-door HVAC air intake of shown in FIG. 1 but illustrating the upper or gate portion in isolation;
FIG. 3 is a view of the two-door HVAC air intake similar to that of FIG. 2 but illustrating the intake from its opposite side in which the fresh air opening is shown;
FIG. 4 is an end view of the two-door HVAC air intake shown in FIG. 1 shown in partial cutaway and illustrating the intake in the fresh air mode;
FIG. 5 is an end view of the two-door HVAC air intake shown in FIG. 1 shown in partial cutaway and illustrating the intake in the partial recirculation mode;
FIG. 6 is an end view of the two-door HVAC air intake shown in FIG. 1 shown in partial cutaway and illustrating the intake in its full recirculation mode;
FIG. 7 is a detailed end view of the two-door HVAC air intake similar to that of FIG. 4 in its fresh air mode but taken from the opposite side to illustrate details of the sealing arrangement;
FIG. 8 is a detailed end view of the two-door HVAC air intake similar to that of FIG. 5 in its partial recirculation mode but taken from the opposite side to illustrate details of the sealing arrangement;
FIG. 9 is a perspective view of the two shell (rotary) doors of the disclosed inventive concept shown in isolation;
FIG. 10 is a view of the two-door HVAC air intake similar to that of FIG. 8 but showing the sealing arrangement in operation;
FIG. 11 is side view of a two-door HVAC air intake shown according to another embodiment of the disclosed inventive concept;
FIG. 12 is side view of a two-door HVAC air intake according to still another embodiment of the disclosed inventive concept; and
FIG. 13 is side view of a two-door HVAC air intake according to yet another embodiment of the disclosed inventive concept.

### DETAILED DESCRIPTION OF THE PREFERRED EMBODIMENT

In the following figures, the same reference numerals will be used to refer to the same components. In the following description, various operating parameters and components are described for different constructed embodiments. These specific parameters and components are included as examples and are not meant to be limiting.

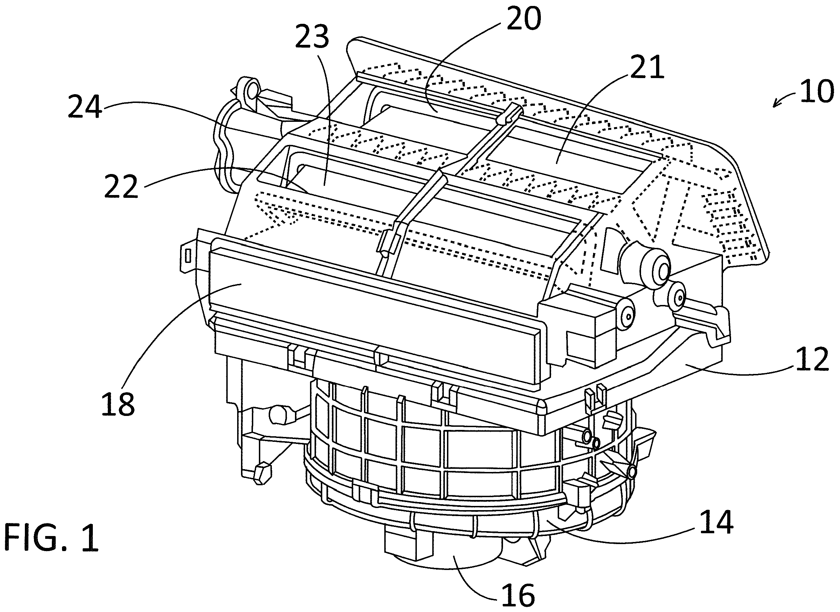

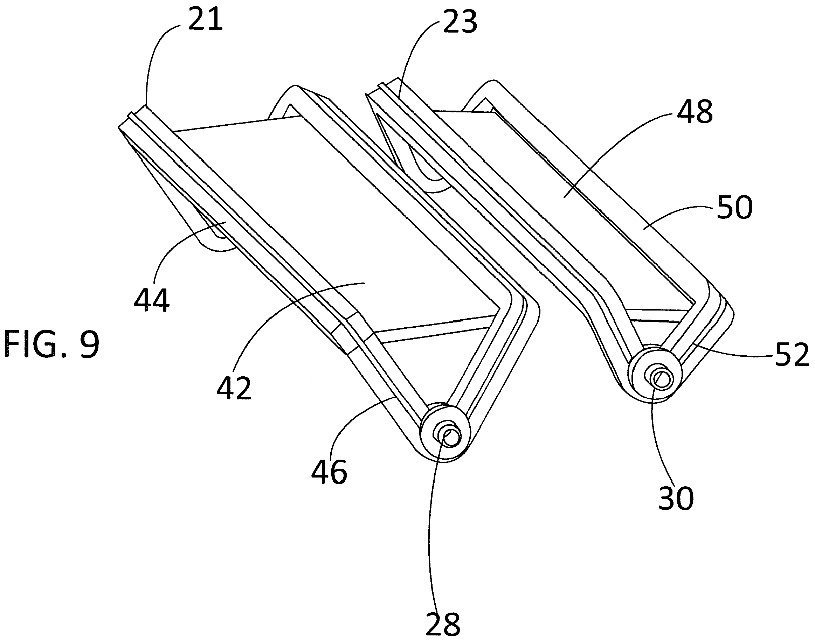

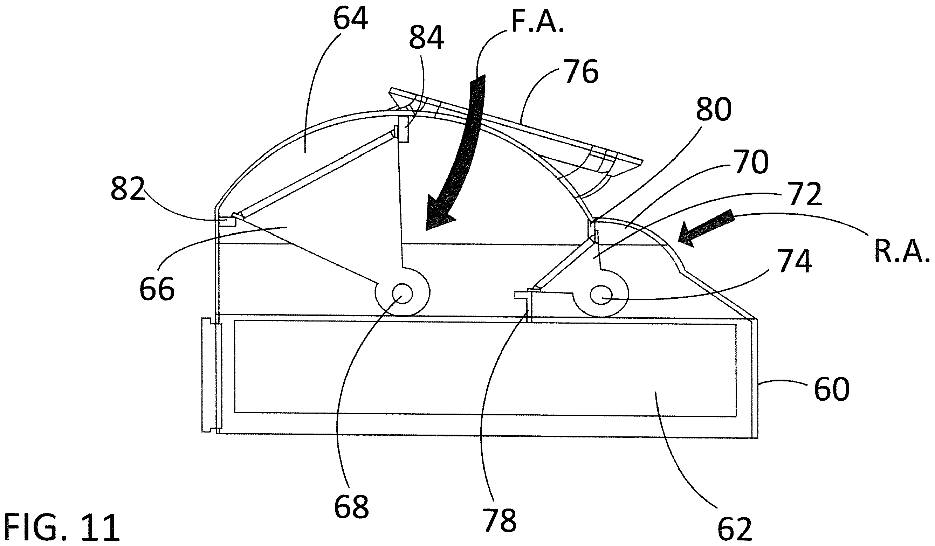

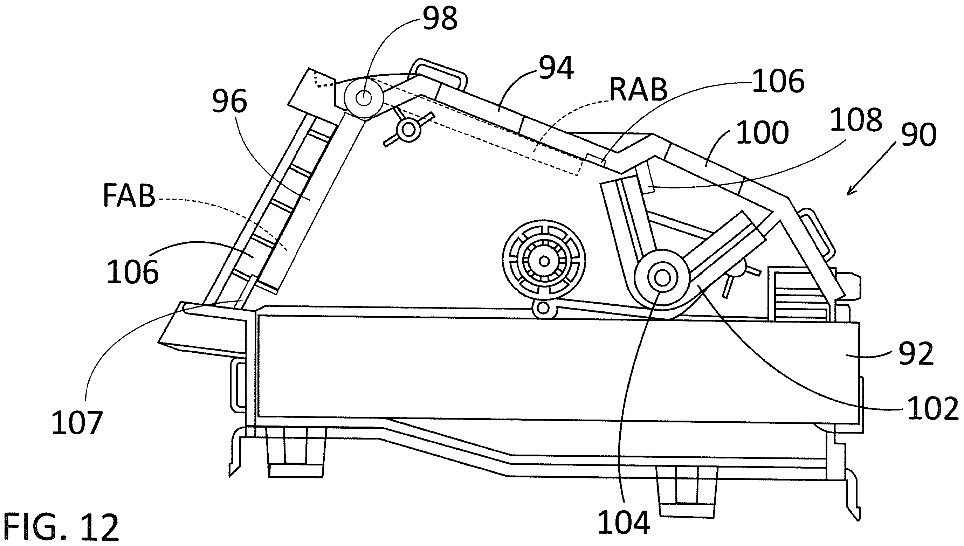

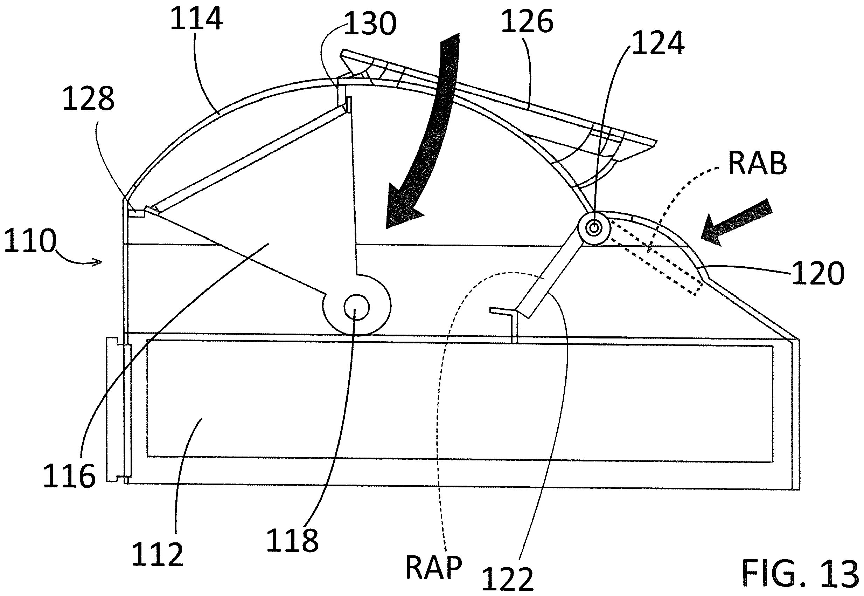

The accompanying figures and the associated description illustrate embodiments of the two-door HVAC air intake system according to the disclosed inventive concept. Particularly, FIGS. 1 through 8 and 10 illustrate the two-door HVAC air intake system according to one embodiment of the disclosed inventive concept. Another embodiment of the disclosed inventive concept is illustrated in FIG. 11. The two rotary shell doors of the first embodiment of the disclosed inventive concept are shown in isolation in FIG. 9. These shell doors may be usable in any embodiment of the disclosed inventive concept. As an alternative to shell doors of FIGS. 1 through 11, flap doors may alternatively be used as one or both of the rotary doors. These alternative arrangements are illustrated in FIGS. 12 and 13. The various figures illustrated the two-door HVAC air intake system in its various modes of operation.

It is to be understood that the under-hood features and arrangement may be different from those illustrated in FIGS. 1 through 13 without deviating from the spirit or scope of the disclosed inventive concept. It is also to be understood that additional configurations of the two-door HVAC air intake system of the disclosed inventive concept could be adopted without deviating from the spirit or scope of the disclosed inventive concept.

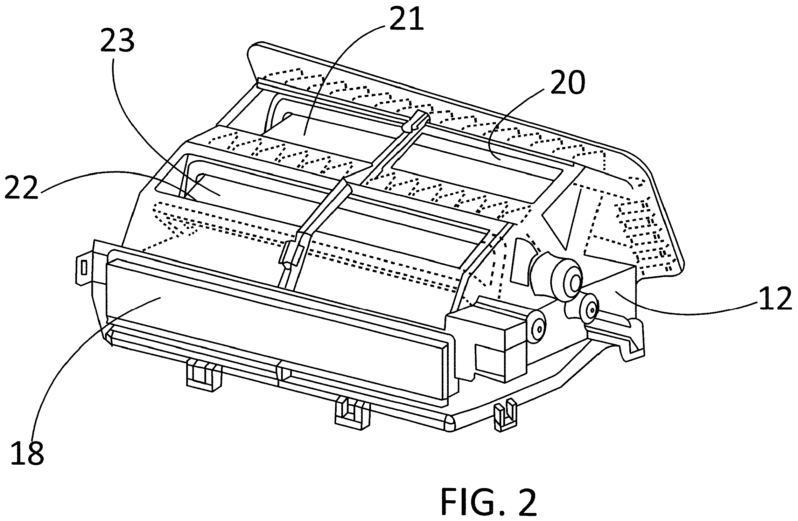

Referring to FIGS. 1 through 10, an embodiment of the two-door HVAC air intake is illustrated. The air intake is illustrated in perspective views from a first angle in FIGS. 1 and 2 wherein the whole intake is illustrated in FIG. 1 and the upper portion of the intake is illustrated in FIG. 2. Referring to these figures, a two-door HVAC air intake is generally illustrated as 10. The two-door HVAC air intake 10 includes an upper gate portion 12 and a lower blower portion 14, the latter being shown only in FIG. 1.

The two-door HVAC air intake 10 further includes a conduit connector 16 for electrical connection to the vehicle's power system (not shown). An interchangeable filter element 18 is provided between the upper gate portion 12 and the lower blower portion 14.

A first recirculation opening 20 is formed in the upper gate portion 12. A first shell (rotary) door 21 is pivotably provided adjacent the first recirculation opening 20. A second recirculation opening 22 is formed in the upper gate portion 12. A second shell (rotary) door 23 is pivotably provided adjacent the second recirculation opening 22.
At least one door controller 24 is provided to selectively pivotably move the first shell door 21 and the second shell door 23. The door controller 24 may be any one of several actuators (including, for example and without limitation, electric motors and vacuum controllers). Preferably, the door controller 24 is an electric servo motor provided whereby the positions of the first shell door 21 and the second shell door 23 are continuously variable.

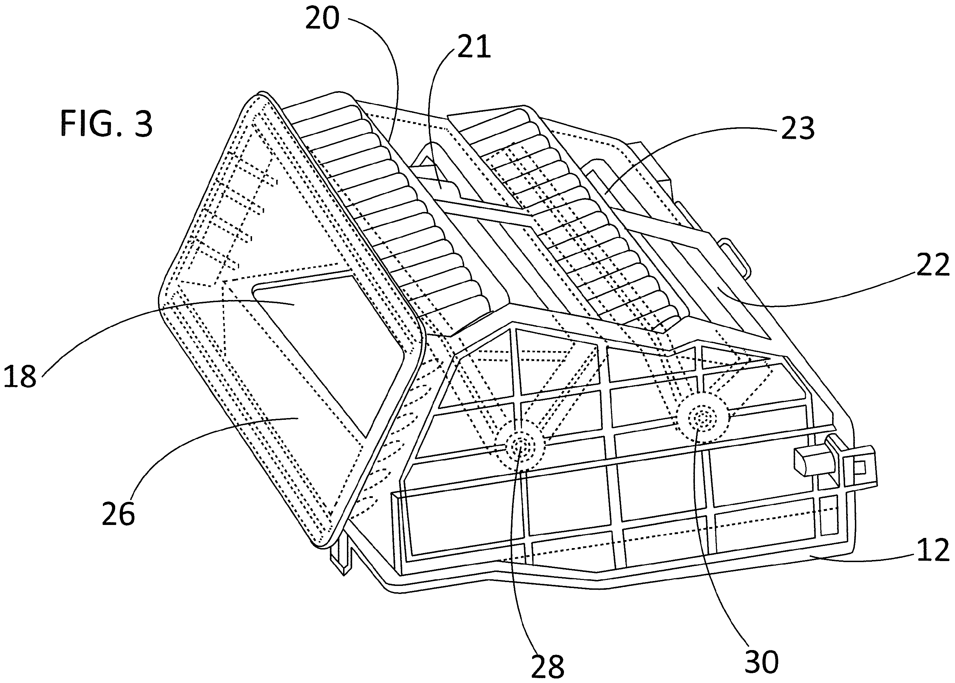

FIG. 3 illustrates a perspective view of the upper gate portion 12 from the side opposite that of FIG. 2. With reference thereto, a fresh air opening 26 is illustrated. The shape and position of the fresh air opening 26 may be varied from that illustrated. As also illustrated in FIG. 3, the first shell door 21 is attached to the upper gate portion 12 by opposed pivot points of which one, a pivot point 28 is illustrated. The second shell door 23 is also attached to the upper gate portion 12 by opposed pivot points of which one, a pivot point 30 is illustrated.

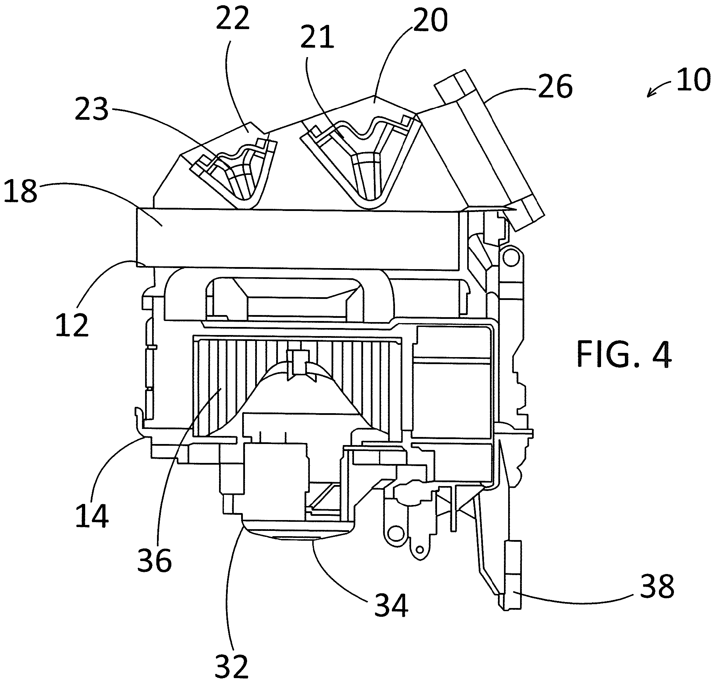

Side views of the two-door HVAC air intake 10 are illustrated in FIGS. 4 through 6 which the various modes of the disclosed inventive concept are shown. Particularly, and referring to FIG. 4, the two-door HVAC air intake 10 is in its fresh air mode. This mode is achieved by, first, rotation of the first shell door 21 to a position in which the first recirculation opening 20 is blocked and the fresh air opening 26 is unblocked and, second, rotation of the second shell door 23 to a position in which the second recirculation opening 22 is blocked, the first and second actions preferably being simultaneous.

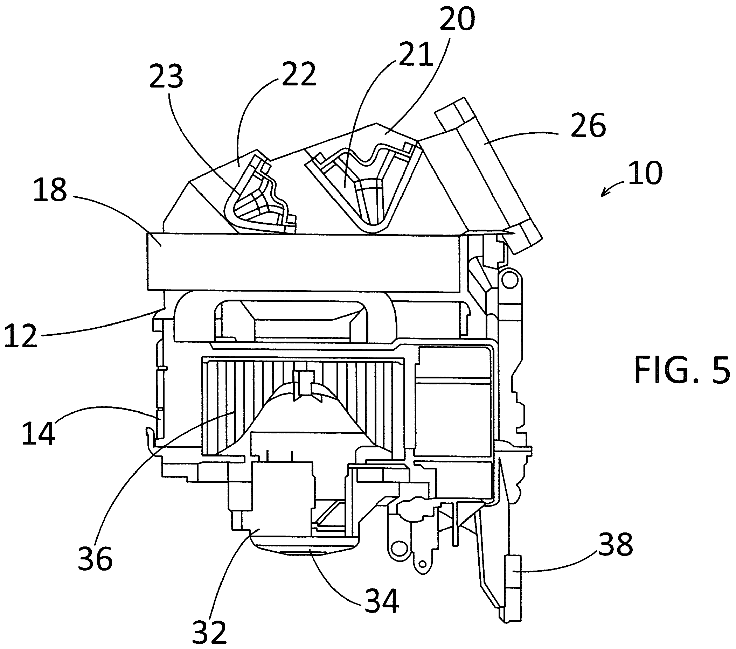

Referring to FIG. 5, the two-door HVAC air intake 10 is in its partial recirculation mode. This mode is achieved by, first, rotation of the first shell door 21 to a position in which the first recirculation opening 20 is blocked and the fresh air opening 26 is unblocked and, second, rotation of the second shell door 23 to a position in which the second recirculation opening 22 is unblocked, the first and second actions preferably being simultaneous.

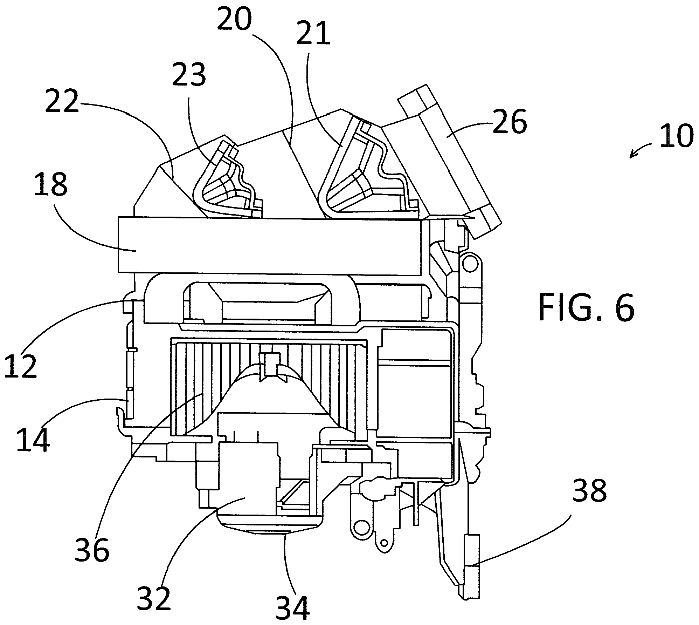

Referring to FIG. 6, the two-door HVAC air intake 10 is in its full recirculation mode. This mode is achieved by, first, rotation of the first shell door 21 to a position in which the first recirculation opening 20 is unblocked and the fresh air opening 26 is blocked and, second, rotation of the second shell door 23 to a position in which the second recirculation opening 22 is unblocked, the first and second actions preferably being simultaneous.

The positions of the first shell door 21 and the second shell door 23 relative to the fresh air mode, the partial recirculation mode and the recirculation mode are generally set forth in the following table:

| **Shell (rotary) door position** | **Fresh Air** | **Partial Recirculation** | **Recirculation** |
|---|---|---|---|
| **First Shell Door 21** | Moved to block off first recirculation opening (fresh air opening unblocked) | Moved to block off first recirculation opening (fresh air opening unblocked) | Moved to block off fresh air opening (first recirculation opening unblocked) |
| **Second Shell Door 23** | Moved to block off second recirculation opening | Moved to unblock second recirculation opening | Moved to unblock second recirculation opening |

It is to be understood that movement of the first shell door 21 and the second shell door 23 may be such that the doors 21 and 23 may be positioned anywhere between their fully closed and fully opened positions. The system therefore provides virtually infinite tunability as needed for maximum cabin comfort and minimum energy consumption.

The FIGS. 4 through 6 also illustrate a blower assembly 32 being part of the lower blower portion 24. The blower assembly 32 includes variable speed blower motor 34 and a blower wheel 36 attached thereto. The two-door HVAC air intake 10 is attached to a body structure (not shown) by one or more support brackets 38 which is illustrated as being suggestive and not limiting.

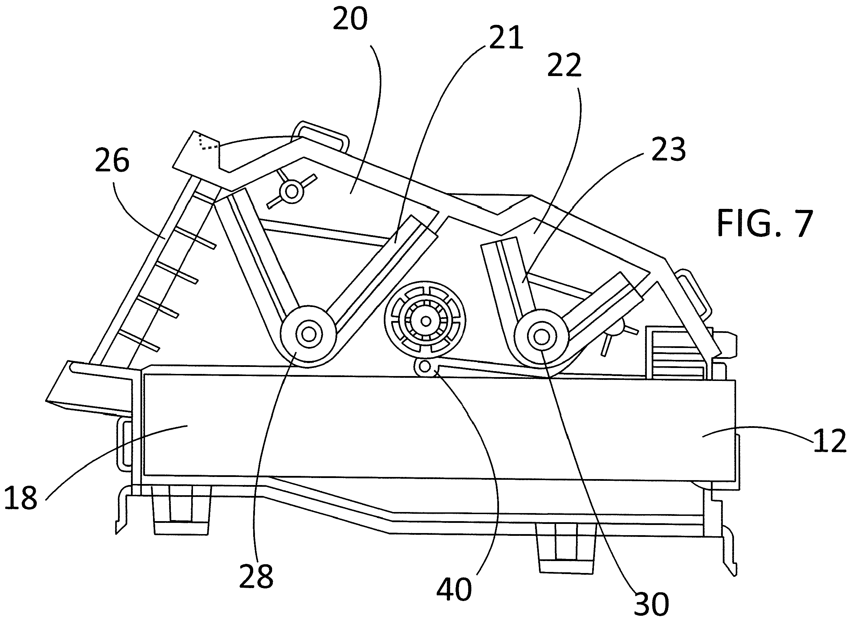

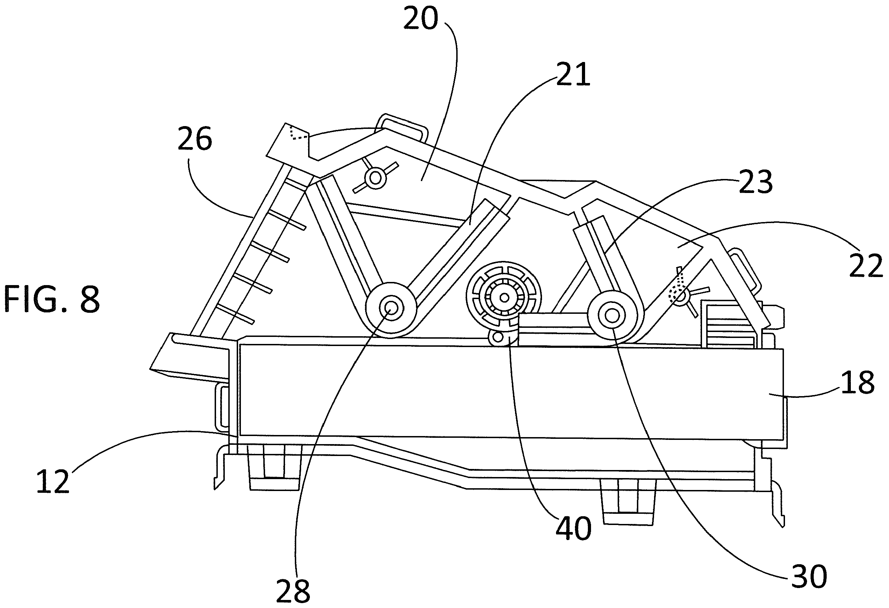

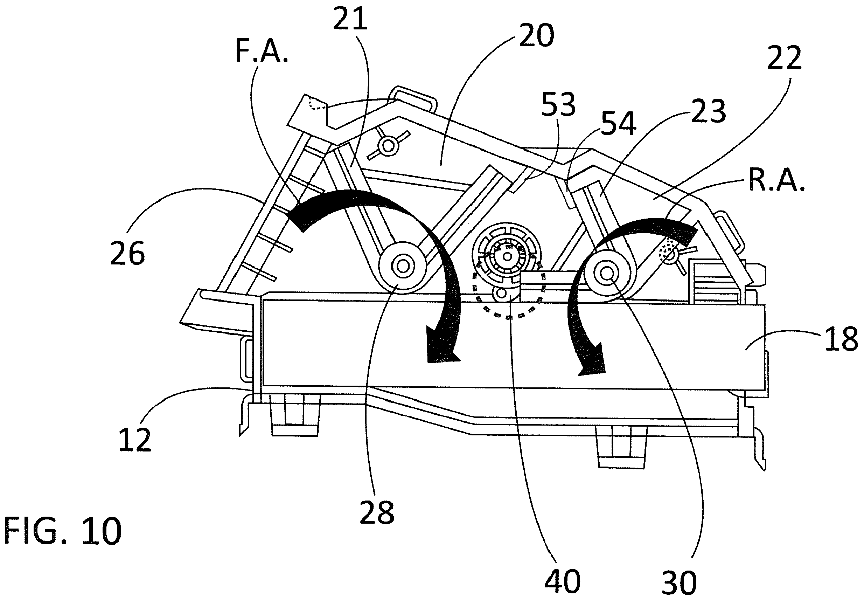

The upper gate portion 12 includes an arrangement of internal seals to minimize air blow-by and the related reduction of efficiency and the requirement of increased energy consumption, specifically preventing the bypass of outside air into the cabin. Particularly, as illustrated in FIGS. 7, 8 and 10, an air seal arrangement 40 is illustrated against which the a portion of the second shell door 23 rests when moved from the fresh mode in which the second shell door 23 blocks the second recirculation opening 22 as illustrated in FIG. 7 to the partial recirculation mode in which the second shell door 23 is moved to a position in which the second recirculation opening 22 is unblocked (as illustrated in FIGS. 8 and 10). The incoming fresh air ("F.A.") passing into the fresh air opening 26 and the incoming recirculated air ("R.A.") passing into the second recirculation opening 22 and through the filter element 18 of the gate portion 12 into the vehicle's cabin (not illustrated) are shown in FIG. 10.

The first shell door 21 and the second shell door 23 are illustrated in isolation in FIG. 9. It is to be understood that the specific shapes and structures of the doors 21 and 23 as illustrated are suggestive and are not intended as being limiting. Preferably, but not exclusively, the shell door 21 includes a door wall 42 supported by a door frame 44. A door seal 46 is formed on the outer side of the door frame 44. In the same manner, the shell door 23 includes a door wall 48 supported by a door frame 50. A door seal 52 is formed on the outer side of the door frame 50. The door seals 46 and 52 provide an airtight seal within the upper gate portion 12 between the shell doors 21 and 23 and the inner surfaces of the upper gate portion 12.

Referring to FIG. 10, sealing arrangements for the shell door 21 and the shell door 23 are illustrated. Particularly, a door seal 53 is provided for sealing the door 21 when rotated to its fresh air passing position while a door seal 54 is provided for sealing the door 23 when rotated to its recirculated air passing position.

The embodiment of the two-door HVAC air intake illustrated in FIGS. 1 through 8 and 10 as shown and as discussed above is one suggested embodiment in which the first recirculated air opening 20 and the second recirculated air opening 22 are situated side-by-side and the fresh air opening 26 is situated adjacent the first recirculated air opening 20. However, other variations of placement of the recirculated air openings relative to the fresh opening are possible without deviating from either the spirit or the scope of the disclosed inventive concept. One such alternative embodiment is illustrated in FIG. 11.

With respect to FIG. 11, the positions of the recirculated air openings relative to the fresh air opening have been altered. Specifically, an upper gate portion 60 is illustrated in sectional view. The upper gate portion 60 includes a filter element 62. A first recirculation opening 64 is provided having a first shell (rotary) door 66. The first shell door 66 is made pivotable with respect to the gate portion 60 by a first shell pivot 68. A second recirculation opening 70 is provided having a second shell (rotary) door 72. The second shell door 72 is made pivotable with respect to the gate portion 60 by a second shell pivot 74. A fresh air opening 76 is positioned between the first recirculation opening 64 and the second recirculation opening 70. The position of the first shell door 66 is shown blocking the first recirculation opening 64 while the position of the second shell door 72 is shown a position in which the second recirculation opening 70 is open, thereby representing the partial recirculation mode. In this mode, the incoming fresh air ("F.A.") passes into the fresh air opening 76 and the incoming recirculated air ("R.A.") passes into the second recirculation opening 70 and through the filter element 62 of the upper gate portion 60 and into the vehicle's cabin (not illustrated).

A sealing arrangement is provided in the upper gate portion 60 to maintain a tight seal of the shell doors. Particularly, and as illustrated in FIG. 11, a lower air seal 78 and an upper air seal 80 are provided to minimize the risk of air bypassing the second shell door 72 when moved to its position in which the second recirculation opening 70 is unblocked. In addition, a lower seal 82 and an upper seal 84 are provided to minimize the risk of air bypassing the first shell door 66 when moved to its position in which the first recirculation door opening 64 is blocked.

The embodiments of the two-door HVAC air intake illustrated in FIGS. 1 through 11 as shown and as discussed above are suggested embodiments in which a rotary shell door is utilized. As an alternative to the flap door, a flap door may be utilized. This arrangement is illustrated in FIGS. 12 and 13.

With respect to FIG. 12, an upper gate portion 90 is illustrated in sectional view. The upper gate portion 90 includes a filter element 92. A first recirculation opening 94 is provided having a flap door 96. The flap door 96 is made pivotable with respect to the upper gate portion 90 by a flap pivot 98. A second recirculation opening 100 is provided having a rotary shell door 102. The rotary shell door 102 is made pivotable with respect to the upper gate portion 90 by a rotary shell door pivot 104.

A fresh air opening 106 is positioned adjacent the first recirculation opening 94 although the fresh air opening 106 could also be positioned between the first recirculation opening 94 and the second recirculation opening 100. The position of the flap door 96 can be either a flap fresh air blocking position ("F.A.B.", shown in broken lines) or a flap recirculated air blocking position ("R.A.B.", also shown in broken lines).

A sealing arrangement is provided in the upper gate portion 90 to maintain a tight seal of the doors. Particularly, and as illustrated in FIG. 12, a lower air seal 107 is provided to minimize the risk of air bypassing the flap door 96 when moved to its fresh air blocking position (as illustrated). An upper air seal 108 is provided to minimize the risk of air bypassing the flap door 96 when moved to its recirculated air blocking position. In addition, a seal 109 is provided to minimize the risk of air bypassing the rotary shell door 102 when moved to its closed position as illustrated in FIG. 12.

When the flap door 96 is in the flap fresh air blocking position (F.A.B.), recirculated air is allowed to pass through the first recirculation opening 94, through the filter element 92 of the upper gate portion 90 and into the vehicle's cabin (not illustrated). At the same time, fresh air is blocked from passing into the fresh air opening 106.

When the flap 96 is rotated to the recirculated air blocking position (R.A.B.), fresh air is allowed to pass through the fresh air opening 106, through the filter element 92 of the upper gate portion 90 and into the vehicle's cabin (not illustrated). At the same time, recirculated air is blocked from passing into the first recirculation opening 94.

While FIG. 12 illustrates a flap door positioned to select between passage of fresh air and recirculated air through the first recirculation opening, flap door may also be used to regulate passage of recirculated air through the second recirculation opening as illustrated in FIG. 13. As a further alternative, flap doors may be used to regulate the passage of recirculated air through both the first and second recirculation openings.

Referring to FIG. 13, an upper gate portion 110 is illustrated in sectional view. The upper gate portion 110 includes a filter element 112. A first recirculation opening 114 is provided having a rotary shell door 116. The rotary shell door 116 is made pivotable with respect to the upper gate portion 110 by a flap pivot 118. A second recirculation opening 120 is provided having a flap door 122. The flap door 122 is made pivotable with respect to the upper gate portion 110 by a rotary shell door pivot 124.

A fresh air opening 126 is positioned between the first recirculation opening 114 and the second recirculation opening 120. Alternatively, the fresh air opening 126 could be positioned adjacent the first recirculation opening 114. The position of the flap door 122 can be either a recirculated air blocking position ("R.A.B.", shown in broken lines) or a flap recirculated air passing position ("R.A.P.", also shown in broken lines).

A sealing arrangement is provided in the upper gate portion 110 to maintain a tight seal of the doors. Particularly, and as illustrated in FIG. 13, a lower air seal 128 and an upper air seal 130 are provided to minimize the risk of air bypassing the rotary shell door 116 when moved to its position in which the first recirculation opening 114 is blocked as illustarted.

When the flap door 122 is in the flap recirculated air passing position (R.A.P.), recirculated air is allowed to pass through the second recirculation opening 120, through the filter element 112 of the upper gate portion 110 and into the vehicle's cabin (not illustrated). When the flap door 122 is rotated to the flap recirculated air blocking position (R.A.P.), recirculated air is blocked from passing into the first recirculation opening 114.

Regardless of the embodiment, the specific movement of the first door relative to the first recirculation opening and the fresh air opening and the specific movement of the second door relative to the second recirculation opening are controlled by vehicle components that regulate blower speed, temperature in the cabin, the direction of air flow and the ratio of fresh air to recirculated air. Such conditions are monitored by sensors (not shown). An electronic controller and associated operating software generate signals to control the door actuators according to the conditions as indicated by the sensors. In this way, the disclosed inventive concept provides for economic operation of the vehicle's HVAC system whereby fuel economy and/or high voltage (HV) batter power consumption is minimized while providing optimum heating and cooling performance to thereby provide a comfortable in-cabin experience for vehicle passengers. The disclosed inventive concept achieves the noted advantages without adding weight, cost, or complexity to the HVAC system of the vehicle. The disclosed inventive concept may be used with any type of vehicle.

One skilled in the art will readily recognize from such discussion, and from the accompanying drawings and claims that various changes, modifications and variations can be made therein without departing from the true spirit and fair scope of the invention as defined by the following claims.

## Claims

1. An intake for economically controlling a heating, ventilation and air conditioning (HVAC) system for a vehicle having an interior and an exterior, the intake comprising:
an intake body;
a fresh air opening formed in said body;
a first recirculated air opening formed in said body;
a second recirculated air opening formed in said body;
a first rotary door pivotably disposed in said body, said first door being reversibly movable from a first recirculation opening-unblocking/fresh air opening-blocking position to a first recirculation opening-blocking/fresh air opening-unblocking position; and
a second rotary door pivotably disposed in said body, said second door being reversibly movable from a second recirculation opening-unblocking position to a second recirculation opening-blocking position.

2. The intake for economically controlling a heating, ventilation and air conditioning (HVAC) system of claim 1, wherein said first and second doors are selected from the group consisting of a shell door and a flap door.

3. The intake for economically controlling a heating, ventilation and air conditioning (HVAC) system of claim 1, wherein the intake is in a fresh air condition when said first and second doors are in their recirculation opening-blocking positions.

4. The intake for economically controlling a heating, ventilation and air conditioning (HVAC) system of claim 3, wherein the intake is in a partial air recirculation condition when said first door is in its first recirculation opening-blocking position and said second door is in its second recirculation opening-unblocking position.

5. The intake for economically controlling a heating, ventilation and air conditioning (HVAC) system of claim 4, wherein the intake is in full air recirculation condition when said first door is in its first recirculation opening-unblocking/fresh air opening-blocking position and said second door is in its second recirculation opening-unblocking position.

6. The intake for economically controlling a heating, ventilation and air conditioning (HVAC) system of claim 1, wherein said first recirculated air opening and said second recirculated air opening are situated side-by-side and said fresh air opening is situated adjacent said first recirculated air opening.

7. The intake for economically controlling a heating, ventilation and air conditioning (HVAC) system of claim 1, wherein said fresh air opening is situated between said first recirculated air opening and said second recirculated air opening.

8. The intake for economically controlling a heating, ventilation and air conditioning (HVAC) system of claim 1, wherein each of said first and second doors includes a frame, said frame including a peripheral sealing element.

9. The intake for economically controlling a heating, ventilation and air conditioning (HVAC) system of claim 8, wherein said body includes an interior, said body including sealing elements.

10. An intake for economically controlling a heating, ventilation and air conditioning (HVAC) system for a vehicle having an interior and an exterior, the intake comprising:
an intake body;
a fresh air opening formed in said body;
a first recirculated air opening formed in said body;
a second recirculated air opening formed in said body;
a first rotary door pivotably disposed in said body; and
a second rotary door pivotably disposed in said body, said first and second doors being selected from the group consisting of a shell door and a flap door.

11. The intake for economically controlling a heating, ventilation and air conditioning (HVAC) system of claim 10, wherein said first door is reversibly movable from a first recirculation opening-unblocking/fresh air opening-blocking position to a first recirculation opening-blocking/fresh air opening-unblocking position

12. The intake for economically controlling a heating, ventilation and air conditioning (HVAC) system of claim 11, wherein said second door is reversibly movable from a second recirculation opening-unblocking position to a second recirculation opening-blocking position

13. The intake for economically controlling a heating, ventilation and air conditioning (HVAC) system of claim 12, wherein the intake is in a fresh air condition when said first and second doors are in their recirculation opening-blocking positions.

14. The intake for economically controlling a heating, ventilation and air conditioning (HVAC) system of claim 13, wherein the intake is in a partial air recirculation condition when said first door is in its first recirculation opening-blocking position and said second door is in its second recirculation opening-unblocking position.

15. The intake for economically controlling a heating, ventilation and air conditioning (HVAC) system of claim 14, wherein the intake is in full air recirculation condition when said first door is in its first recirculation opening-unblocking/fresh air opening-blocking position and said second door is in its second recirculation opening-unblocking position.

16. The intake for economically controlling a heating, ventilation and air conditioning (HVAC) system of claim 10, wherein said first recirculated air opening and said second recirculated air opening are situated side-by-side and said fresh air opening is situated adjacent said first recirculated air opening.

17. The intake for economically controlling a heating, ventilation and air conditioning (HVAC) system of claim 10, wherein said fresh air opening is situated between said first recirculated air opening and said second recirculated air opening.

18. The intake for economically controlling a heating, ventilation and air conditioning (HVAC) system of claim 10, wherein each of said first and second doors includes a frame, said frame including a peripheral sealing element.

19. The intake for economically controlling a heating, ventilation and air conditioning (HVAC) system of claim 18, wherein said body includes an interior, said body including sealing elements.

20. A method of economically controlling a heating, ventilation and air conditioning (HVAC) system for a vehicle having an interior and an exterior, the method comprising:
forming an intake comprising a body, a fresh air opening formed in said body, a first recirculated air opening formed in said body, a second recirculated air opening formed in said body, a first rotary door being pivotably disposed in said body, said first door being reversibly movable from a first recirculation opening-unblocking/fresh air opening-blocking position to a first recirculation opening-blocking/fresh air opening-unblocking position, and a second rotary door being pivotably disposed in said body, said second door being reversibly movable from a second recirculation opening-unblocking position to a second recirculation opening-blocking position;
selecting an a fresh air condition by moving said first and second doors to their recirculation opening-blocking positions;
alternatively selecting a partial air recirculation condition by moving said first door to its first recirculation opening-blocking position and moving said second door to its second recirculation opening-unblocking position; and
alternatively selecting a full air recirculation condition by moving said first door to its first recirculation opening-unblocking/fresh air opening-blocking position and moving said second door to its second recirculation opening-unblocking position.

21. The method of economically controlling a heating, ventilation and air conditioning (HVAC) system of claim 20, wherein said first and second rotary doors are selected from the group consisting of a shell door and a flap door.

22. The method of economically controlling a heating, ventilation and air conditioning (HVAC) system of claim 21, wherein said first recirculated air opening and said second recirculated air opening are situated side-by-side and said fresh air opening is situated adjacent said first recirculated air opening.

23. The method of economically controlling a heating, ventilation and air conditioning (HVAC) system of claim 21, wherein said fresh air opening is situated between said first recirculated air opening and said second recirculated air opening.
